Europäisches Patentamt

European Patent Office

Office européen des brevets

(11) Publication number: **0 092 803**
**B1**

(12) **EUROPEAN PATENT SPECIFICATION**

(45) Date of publication of patent specification: **19.02.86**

(51) Int. Cl.⁴: **A 23 F 5/10**

(21) Application number: **83103900.3**

(22) Date of filing: **21.04.83**

(54) **Process for treating roasted coffee and plant for carrying out the process.**

(30) Priority: **27.04.82 IT 2095082**

(43) Date of publication of application:
**02.11.83 Bulletin 83/44**

(45) Publication of the grant of the patent:
**19.02.86 Bulletin 86/08**

(84) Designated Contracting States:
**AT BE CH DE FR GB LI LU NL SE**

(56) References cited:
**GB-A-1 024 214**
**US-A-2 136 154**
**US-A-3 613 549**

(73) Proprietor: **ILLYCAFFE S.p.A.**
**Via Flavia, 110**
**I-34147 Trieste (IT)**

(72) Inventor: **Illy, Ernesto**
**Via Locchi, 8**
**I-34123 Trieste (IT)**

(74) Representative: **Ferraiolo, Ruggero**
**Viale Tunisia, 29**
**I-20124 Milano (IT)**

Courier Press, Leamington Spa, England.

## Description

This invention relates to a process for treating roasted coffee and a plant for carrying out the process, which process is particularly adapted to that coffee which, after treatment and grinding, is used for producing coffee pods for use in coffee machines brewing coffee beverage from said pods.

The industrially roasted coffee should be packed so as to maintain as long as possible those properties that make palatable the beverage as brewed therefrom.

It is known that soon after the roasting, coffee starts evolving gas comprising a high $CO_2$ percentage and that the evolution of such gas may last from a few days up to about two weeks and also it is known that, if proper processing would not be used, a certain part of aromatic volatile substances would be evolved and lost together with said gas. Consequently, on one hand, it should be advisable to pack coffee into sealed bags soon after the roasting in order not to loose aromatic substances, on other hand the evolving of said gas advises against packing freshly roasted coffee in sealed bags since in these bags the evolved gas could reach too high pressures. Therefore, it is presently preferred that the roasted coffee be allowed to liberate gas before being packed; but during this stage it should be avoided that the $O_2$ in the air oxidises the aromatic substances of the coffee so damaging the quality thereof and that the aromatic substances leave the coffee. Thus, processes are carried out that comprise the standing of roasted coffee, generally, in air tight containers, under controlled pressure, where the liberated gas is removed by blowing in inert gas.

According to the Canadian patent No 853.634, roasted coffee liberates gas in air tight containers and the gas is evacuated from said containers by blowing in inert gas in a controlled manner so that the inner pressure is lower than the atmospheric pressure, but higher than the vapor pressure of at least the majority of the volatile constituents of the coffee. The process is relatively rapid: if the coffee is to be packed in beans, it is left in the containers during 4—5 days, after that it is discharged from the containers and packed in inert gas in gas proof containers. On the contrary, if the coffee is ground before entering the containers, it stands in the containers for few hours only. According to US patent No. 2.136.154 roasted coffee beans are subject to a ripening process for a period extending approximately from 8 to 10 hours, then subjecting said coffee to an alternate vacuum and pressure treatment utilizing an inert gas and then filling the containers with said coffee together with the same inert gas used in the treatment of said coffee beans. The inconveniences of the above mentioned processes are that the beverage brewed from the coffee treated accordingly appears still of not fully satisfactory taste.

The scope of the process according to this invention is to keep in the coffee the maximum possible quantity of aromatic substances, in other words, to give the maximum solubility, by solubility meaning the property of keeping and letting to pass in the water the aromatic substances.

The process according to this invention comprises a first step in which the coffee is seasoned and a second step in which the seasoned coffee is stabilized. The first step of the process, which is carried out in one or more containers that are made air tight by proper sealing means, and that in the following will be referred to as seasoning containers :in which roasted coffee is delivered, comprises in turn two stages: a first stage in which most of the air is removed from each seasoning container by means of a stream of $CO_2$ or another inert gas, for instance $N_2$; a second stage in which, soon after the removal of most of the air from each seasoning container, the internal gas pressure in each seasoning container is established at an initial value of at least 0,4 Atm and is controlled so as not to exceed 1,8 Atm, for a period of up to about twenty-one days. The second part of the process comprises the stabilizing during some hours in gas non-tight containers (that in the following will be referred to as stabilization containers) of the seasoned coffee, in other words the reaching of equilibrium conditions, especially of hygrometric equilibrium between the coffee beans and the ambient atmosphere. Once the second part of the process is completed, the coffee is ground immediately and formed in coffee pods or packed.

More particularly, with reference to the first step of the process, in the first stage and roasted coffee is delivered into one or more seasoning containers, until 90—95% full, then a stream of $CO_2$ is blown in the lower end of each seasoning container in order to remove the air therefrom until the percentage of $O_2$ in each seasoning container is between 0,2% and 1%, preferably between 0,4% and 0,5%. The first stage is concluded by still blowing a stream of $CO_2$ or alternatively $N_2$ and then by closing all apertures and valves; in the second stage the ambient for the coffee in the seasoning containers is $CO_2$ with $O_2$ remainders of the air or is $N_2$ with $O_2$ remainders of the air. Alternatively, from the beginning of the first stage a stream of $N_2$ is blown in. In the second stage the initial pressure in each seasoning container is lead at least to 0,4 Atm by conventional means and, since such initial pressure tends to spontaneously increase to or exceed 1 Atm, the pressure is kept between 1 Atm and 1,8 Atm by the use of a safety valve.

The maximum value of 1,8 Atm appears to be a convenient one in order to obtain a good result of the process as well as with regards to the technical problems (sizing of the elements, seal of the connections, etc.).

During the about twenty-one days of the second stage, namely of the seasoning, a centralized gas analyser, adapted to periodically and cyclically analyse the gas in each seasoning container (or alternatively single analyzers connected with each seasoning container) analyse the ratio $O_2/CO_2$ or $O_2/N_2$ and a human or automatic operator controls that the percentage of $O_2$, as specified above, is present in each seasoning container and, if said ratio is too high, operates in order to adjust it correctly by causing the blowing in of an adequate quantity of $CO_2$. In the second part of the process the seasoned coffee is passed to one or more stabilization containers to stand there for stabilization; in fact, the coffee as seasoned in the first part of the process is generally very dry and if it would be ground immediately in said conditions difficulties would rise in order to obtain a proper granulometry since the friability of the beans would vary rapidly together with the absorption of the humidity as contained in the air with the gas exchange with the ambient. Therefore, it will be realized that the standing during some hours of the seasoned coffee in contact with the ambient air and, if necessary, with conveniently humidified air blown in by proper means, stabilizes the coffee particularly from the hygrometric point of view.

The advantages of this process, established experimentally, mainly reside in producing a coffee product capable of being formed into coffee pods having a high degree of solubility and consistently in quality so that the control of the coffee pods during production may be reduced or completely cancelled.

The plant for carrying out the process as above described comprises: means for delivering coffee that has just been roasted in a roasting plant to an inlet means in an apparatus for moving the coffee as delivered into said inlet means; one or more seasoning containers preferably in the form of elongated vertical silos to which the coffee moved by said apparatus is supplied; an outlet means in each seasoning container for evacuating the air supplied together with the coffee supplied to the containers, sources of pressurized $CO_2$ and/or $N_2$; an inlet means in each seasoning container for supplying $CO_2$ or $N_2$ coming from the corresponding source; an exhaust valve for the gas in each seasoning container; an analyzing equipment adapted to automatically analyse the ratio of $O_2/CO_2$ or of $O_2/N_2$ in each seasoning container; a valve in each seasoning container adapted to discharge the gas in the seasoning containers as the gas pressure exceeds a predetermined value; a pressure gauge in each seasoning container for showing the value of the inner pressure; a duct connecting said outlet means in each seasoning container with a filter for filtering the air coming out of the seasoning containers when coffee enters said containers; a valve in each seasoning container for controlling the delivery of coffee to said containers; a valve in each seasoning container for controlling the delivery of $CO_2$ and/or $N_2$ through said inlet means; a valve in each seasoning container for controlling said outlet means for the air from the seasoning containers; a valve at the lower end in each seasoning container for allowing and controlling the discharge of coffee from said containers; an apparatus for receiving the coffee as discharged from the valves at the lower ends in the seasoning containers and for moving the discharged coffee to one or more stabilization containers to which the coffee moved by said apparatus is supplied; a valve in the lower end in each stabilization container for controlling the outlet of the coffee.

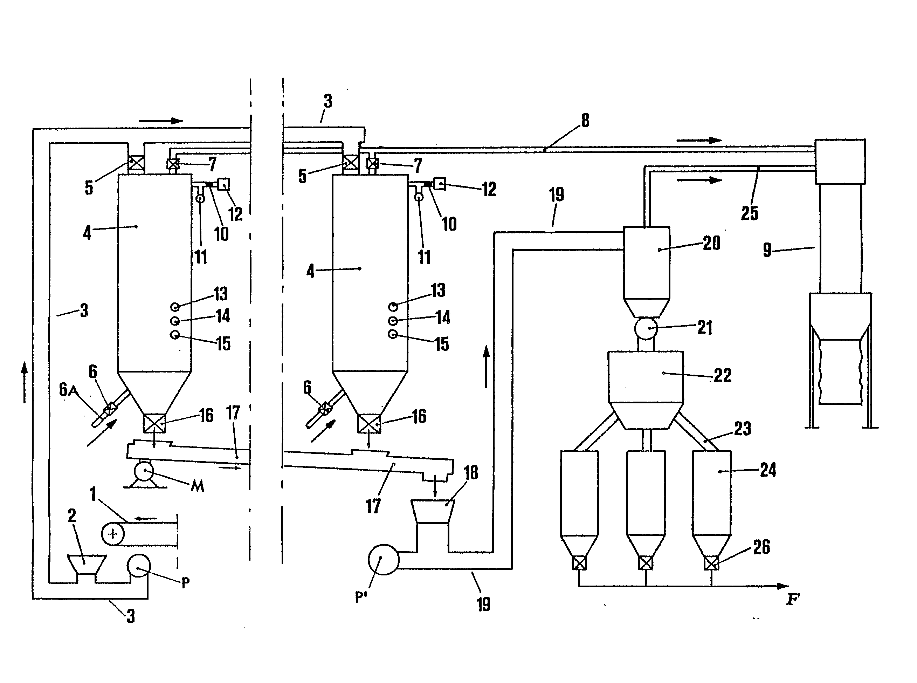

The invented process and plant will be described in detail with reference to an embodiment as illustrated in the attached drawing. A conveyor 1 moves coffee, freshly roasted in a roasting plant not shown in the drawing, to a hopper 2 of a pneumatic apparatus 3 (P shows a pump of this apparatus) which delivers coffee to a plurality of seasoning containers 4, the valves 5 and 7 being opened and the valves 6, 10, 11, 16 being closed. The coffee enters the seasoning containers 4 and the air delivered together with coffee to said containers leaves through the valves 7 to be filtered in the filter 9 where the air arrives through the duct 8 before being returned to the ambient. As the seasoning containers 4 are filled by about 95% of their volume, the conveyor 1 and the pneumatic apparatus 3 stop, the valves 5 and 7 close, the valves 6 open and through said valves $CO_2$ is blown in, by known means not shown, which $CO_2$ comes, from a source of $CO_2$ not shown, through a duct 6A. On starting of the blowing of $CO_2$ stream the automatic analyzers 12 begin to analyse the percentage of $O_2$ in the seasoning containers 4 and once such percentage reaches 0,45% the blowing of a $CO_2$ stream is stopped; in the same time an operator controls the inner pressure by the pressure gauge 13 until the pressure reaches the value of 1,2 Atm. At that point, the removing of the most of the air from the seasoning containers stops and the seasoning starts during which seasoning the pressure in the seasoning containers is kept at the maximum value of 1,2 Atm by means of the valve 10 conveniently controlled while the percentage of $O_2$ in the seasoning containers 4 is controlled by the analyzer 12 in order to be kept at the value of 0,45%. A safety valve 11 assures the gas discharge in the case the inner pressure of this gas exceeds the value of 1,3 Atm, whereas a rapid exhaust diaphragm device 14 and an acoustic alarm device 15 start working in case the safety valve 11 fails.

Once the fifteenth days period has passed from the starting of the process, an operator opens the valves 16 at the lower ends of the seasoning containers 4 and the seasoned coffee falls in a vibratory duct 17; vibration of the duct is effected by an engine M in order to spread the mass of coffee along the duct 17 and move towards the right end of said duct until the coffee falls in the hopper 18 of a pneumatic apparatus 19 (P' shows the pump of this apparatus). As coffee falls into the hopper 18 the pneumatic apparatus starts working and moves coffee in the centrifugal dust separator 20 in which air and coffee are separated: the coffee is passed by an air tight rotating valve 21 into a rotating distributor 22 that, through the distribution ducts 23, conveniently distributes the coffee in three open stabilization containers 24; the air reaches the filter 9 along the duct 25. At the bottom of each stabilization container 24 there is a valve 26 which serves to discharge the stabilized coffee after a few hours it entered said stabilization containers 24. The drawing shows some arrows, without reference numbers, that are sufficient to show the path of the coffee and of the air in the plant. The arrow F means that the coffee as discharged from the valves 26 proceeds to a ginding plant not shown. The length of the time that the coffee remains in the stabilization containers 24 depends on the characteristics of the coffee and on the conditions of the air circulating in the above containers.

It will be appreciated that the seasoning containers 4 and the stabilization containers 24 may simultaneously be used for performing each corresponding stage or step of the process or non-simultaneously used for performing each corresponding stage or step of the process.

## Claims

1. A process for treating a roasted coffee wherein the roasted coffee is delivered to one or more air tight containers in which the coffee liberates gas that is removed by blowing air or other gas and wherein the coffee remains during a certain length, of time under controlled pressure before being ground or packed, the process being characterized in that a first step is carried out in one or more seasoning containers and a second step is carried out in one or more stabilization containers; in that the first step of the process comprises a first stage in which roasted coffee is delivered to each seasoning container, then a stream of $CO_2$ alternatively of $N_2$ is blown therein to remove air until the percentage of $O_2$ in each seasoning container is within 0,2% and 1%, preferably within 0,4% and 0,5%; in that a second stage of the process comprises the rising of the gas pressure in each seasoning container just after the completion of the first stage to at least the value of 0,4 Atm and the rising and keeping of the pressure in each seasoning container at a value of at least equal to 1 Atm and not higher than 1,8 Atm; in that the length of time of the second stage is about twenty-one days during which an analyzer periodically analyses the ratio $O_2/CO_2$ in each seasoning container and an operator controls that the percentage of $O_2$ in each seasoning container is of a predetermined value comprised between the percentage values as above specified and, if such percentage is too high, he operates to blow an adequate stream of $CO_2$ alternatively of $N_2$ in each seasoning container and to remove air therefrom correspondingly; in that in the second step of the process and roasted coffee is passed from each seasoning container to one or more stabilization containers in which the coffee stands during few hours in contact with ambient air and is then delivered to a grinding or packing plant.

2. A process according to claim 1 characterized in that a first stage is carried out in which roasted coffee is delivered to each seasoning container and then a stream of $CO_2$ is first blown in in order to remove air therefrom and finally a stream of $N_2$ is blown in until the percentage of $O_2$ in each gas seasoning container is within 0,2% and 1%, preferably within 0,4% and 0,5%, the ambient for the coffee in each seasoning container being $N_2$ and $O_2$ and in that an analyzer periodically first analyses the ratio $O_2/CO_2$ and afterwards analyses the ratio $O_2/N_2$ in each seasoning container and an operator controls that the percentage of $O_2$ in each seasoning container is of a predetermined value comprised between the percentage values as specified above so that, if said percentage is too high, he operates to blow an adequate stream of $CO_2$ or $N_2$ in each seasoning container and to remove further air therefrom correspondingly.

3. A process according to claim 1 characterized in that in the second step of the process the roasted coffee is passed from each seasoning container to one or more stabilization containers in which the coffee stands for a few hours in a stream of conveniently humidified air and is then delivered to a grinding or packing plant.

4. A plant for carrying out the process according to the preceding claims comprising means for moving roasted coffee to an apparatus which moves the roasted coffee, one or more seasoning containers in which the coffee moved by said apparatus is delivered through inlet means, controllable means for the inlet of gas in the seasoning containers, controllable means for the outlet of gas from the gas proof containers, at least a source of gas, means for blowing gas in the seasoning containers through the controllable means for the inlet of gas, means for the control of the maximum pressure as allowed for the gas in the seasoning containers, means for allowing the outlet of the roasted coffee from the seasoning containers, the plant being characterized in that it comprises a pneumatic apparatus for moving roasted coffee to each seasoning container through an inlet valve controlled by an operator for the inlet of the coffee moved by the pneumatic apparatus, a source of pressurized $CO_2$ connected with each seasoning container through a duct and an inlet valve, the inlet valve being controlled by an operator for the inlet of $CO_2$ in each seasoning container when the operator stops the inlet of the roasted coffee in each seasoning container and for removing most of the air therefrom, a valve for the outlet from each seasoning container, controlled by an operator, for the outlet of the air from each seasoning container during the inlet of the roasted coffee and of $CO_2$ in each seasoning container, a duct connecting the outlet valves with a filter for the air removed from each seasoning container, an exhaust valve, in each seasoning container, controlled by an operator for allowing gas discharge from each seasoning container when the gas pressure exceeds a predetermined value, a safety valve in each air tight container set for allowing gas discharge from each seasoning container when the gas pressure exceeds a value a little higher than the above predetermined value, an automatic analyzer adapted to periodically control the percentage of $O_2$ in each seasoning container during and after the blowing in of the $CO_2$ stream, a device by which an operator operates the blowing of the pressurized gas in each seasoning container on command of the automatic analyzer, through the inlet valves, a pressure gauge associated with each seasoning container, a rapid exhaust device and an alarm device associated with each seasoning container for working in case the safety valve fails, a valve at the bottom of each seasoning container that an operator may operate for making the ground coffee to fall out, a conveyor in which the roasted coffee enters when the valves at the bottom of the seasoning containers are opened, the conveyor being adapted to move the roasted coffee to an inlet means of a pneumatic apparatus for moving roasted coffee to a centrifugal dust separator, an air tight rotating valve at the bottom of the centrifugal dust separator for making roasted coffee to pass in a rotating distributor adapted to distribute the roasted coffee in one or more stabilization containers through a corresponding distribution duct, a duct connecting the centrifugal dust separator with an air filter.

5. A plant according to claim 4 characterized in that it comprises a source of pressurized $CO_2$ and a source of pressurized $N_2$ each of them being connected with each seasoning container through a duct and an inlet valve, the inlet valve being controlled by an operator for blowing in each seasoning container, once the operator stopped the delivery of roasted coffee to each seasoning container, first a stream of $CO_2$ and afterwards of $N_2$ and for removing most of the air therefrom through the outlet valve and in that it comprises an automatic analyzer adapted to periodically control the percentage of $O_2$ in each seasoning container during the blowing in of $CO_2$ and during and after the blowing in of $N_2$.

6. A plant according to claim 5 characterized in that it comprises a source of pressurized $N_2$ connected with each seasoning container through a duct and an inlet valve, the inlet valve being controlled by an operator for blowing in the seasoning containers, once the operator stopped the delivery of roasted coffee to each seasoning container, a stream of $N_2$ and for removing most of the air therefrom through the outlet valve and in that it comprises an automatic analyzer adapted to periodically control the percentage of $O_2$ in each seasoning container during and after the blowing in of $N_2$.

**Patentansprüche**

1. Verfahren zur Behandlung von geröstetem Kaffee, bei welchem der geröstete Kaffe in einen oder mehrere luftdichte Behälter eingebracht wird, in denen der Kaffee Gas abgibt, das durch Einblasen von Luft oder einem anderen Gas entfernt wird, und in welchem der Kaffee während eines bestimmten Zeitraumes unter kontrolliertem Druck verbleibt, bevor er gemahlen oder abgepackt wird, welches Verfahren dadurch gekennzeichnet ist, daß ein erster Schritt in einem oder mehreren Reifebehältern vorgenommen wird und ein zweiter Schritt in einem oder mehreren Stabilisierungsbehältern vorgenommen wird; daß der erste Schritt des Verfahrens eine erste Stufe aufweist, in welcher gerösteter Kaffee in jeden Reifebehälter eingebracht wird, dann ein Strom von $CO_2$, alternativ von $N_2$, eingeblasen wird, um Luft zu entfernen, bis der Prozentgehalt an Sauerstoff in jedem Reifebehälter zwische 0,2 bis 1%, vorzugsweise zwischen 0,4 bis 0,5 %, ist; daß eine zweite Verfahrensstufe den Anstieg des Gasdrucks in jedem Reifebehälter direkt anschließend an den Abschluß der ersten Stufe auf mindestens den Wert von 0,4 Atm (0,405 bar) und den Anstieg und das Beibehalten des Drucks in jedem Reifebehälter auf einen/einem Wert von mindestens gleich 1 Atm (1,013 bar) und nicht höher als 1,8 Atm (1,823 bar) umfaßt; daß der Zeitraum der zweiten Stufe etwa einundzwanzig Tage beträgt, während welcher ein Analysator periodisch das $O_2/CO_2$-Verhältnis in jedem Reifebehälter analysiert und ein Operator steuert, daß der $O_2$-Prozengehalt in jedem Reifebehälter einem vorherbestimmten Wert innerhalb der oben angegebenen Prozentgehaltwerte liegt und, bei zu hohem Prozentgehalt, das Einblasen eines entsprechenden $CO_2$-Stromes, alternativ eines $N_2$-Stromes, in jeden Reifebehälter und dementsprechend das Entfernen von Luft daraus bewirkt, daß im zweiten Schritt des Verfahrens der geröstete Kaffee von jedem Reifebehälter in einen oder mehrere Stabilisierungsbehälter gebracht wird, in welchen der Kaffee während weniger Stunden in Kontakt mit der Umgebungsluft steht und dann zu einer Mahl- oder Verpackungsanlage befördert wird.

2. Verfahren nach Anspruch 1, dadurch gekennzeichnet, daß eine erste Stufe durchgeführt wird, in welcher gerösteter Kaffee in jeden Reifebehälter eingebracht wird und dann zuerst ein $CO_2$-Strom zum Entfernen von Luft daraus eingeblasen wird und schließlich ein $N_2$-Strom eingeblasen wird, bis der $O_2$-Prozentgehalt in jedem Gasreifebehälter zwischen 0,2 und 1 %, vorzugsweise zwischen 0,4 und 0,5%, liegt, sodaß die Umgebung für den Kaffee in jedem Reifebehälter aus $N_2$ und $O_2$ besteht, daß ein Analysator periodisch zuerst das $O_2/CO_2$-Verhältnis und dann das $O_2/N_2$-Verhältnis in jedem Reifebehälter analysiert und ein Operator steuert, daß der $O_2$-Prozentgehalt in jedem Reifebehälter einen vorherbestimmten Wert innerhalb der oben angegebenen Prozentwerte aufweist, worauf er, wenn der Prozentgehalt zu hoch ist, das Einblasen eines entsprechenden $CO_2$-oder $N_2$-Stromes in jeden Reifebehälter und dementsprechend das Entfernen weiterer Luft aus demselben bewirkt.

3. Verfahren nach Anspruch 1, dadurch gekennzeichnet, daß im zweiten Verfahrensschritt der geröstete Kaffee von jedem Reifebehälter in einen oder mehrere Stabilisierungsbehälter gebracht wird, in welchen der Kaffee einige Stunden in einem Strom von geeignet befeuchteter Luft bleibt und dann zu einer Mahl- oder Verpackungsanlage befördert wird.

4. Anlage zur Durchführung des Verfahrens nach den vorhergehenden Ansprüchen, die Mittel zum Transport gerösteten Kaffees zu einer Vorrichtung, die den gerösteten Kaffee transportiert, einen oder mehrere Behälter, in welchen/welche der von dieser Vorrichtung transportierte Kaffee durch eine Öffnung eingebracht wird, steuerbare Einrichtungen für den Gaseinlaß in die Reifebehälter, steuerbare Einrichtungen für den Gasauslaß aus den gasdichten Behältern, zumindest eine Gasquelle, Mittel zum Einblasen von Gas in die Reifebehälter durch die steuerbaren Einrichtungen für den Gaseinlaß, Mittel zur Steuerung des für das Gas in den Reifebehältern erlaubten Maximaldrucks und Mittel zur Ermöglichung der Abgabe von geröstetem Kaffee aus den Reifebehältern aufweist, welche Anlage dadurch gekennzeichnet ist, daß sie eine pneumatische Vorrichtung zum Transport gerösteten Kaffees in jeden Reifebehälter durch ein Einlaßventil, das von einem Operator für den Einlaß des durch die pneumatische Vorrichtung transportierten Kaffees gesteuert wird, eine Quelle von unter Druck stehendem $CO_2$, die mit jedem Reifebehälter über eine Leitung und ein Einlaßventil verbunden ist, das von einem Operator für den Einlaß von $CO_2$ in jeden Reifebehälter gesteuert wird, wenn der Operator die Zufuhr von geröstetem Kaffee in jeden Reifebehälter stoppt, und zum Entfernen der Hauptmenge Luft aus demselben, ein Auslaßventil aus jedem Reifebehälter, das von einem Operator gesteuert wird, zum Auslaß der Luft aus jedem Reifebehälter während der Zufuhr von geröstetem Kaffee und von $CO_2$ in jeden Reifebehälter, eine Leitung, die die Auslaßventile mit einem Filter für die aus jedem Reifebehälter entfernte Luft verbindet, ein Abzugsventil an jedem Reifebehälter, das von einem Operator gesteuert wird, um, wenn der Gasdruck einen vorherbestimmten Wert übersteigt, den Gasabzug von jedem Reifebehälter zu gestatten, ein Sicherheitsventil an jeder luftdichten Behältereinheit zur Ermöglichung des Gasabzuges aus jedem Reifebehälter, wenn der Gasdruck ein wenig höher als der vorherbestimmte Wert ist, einen automatischen Analysator zur periodischen Kontrolle des $O_2$-Prozentgehaltes in jedem Reifebehälter während und nach dem Einblasen des $CO_2$-Stromes, eine Vorrichtung, mit deren Hilfe der Operator das Einblasen von Druckgas in jeden Reifebehälter auf Befehl des automatischen Analysators durch die Einlaßventile bewirkt, ein mit einem Reifebehälter in Verbindung stehendes Manometer, eine Schnellabzugseinrichtung und eine Alarmanlage in Verbindung mit jedem Reifebehälter für den Fall des Nichtfunktionierens des Sicherheitsventils, ein Ventil am Boden des Reifebehälters, das der Operator bedienen kann, um den gemahlenen Kaffee herausfallen zu lassen, ein Transportband, auf welches der geröstete Kaffee aufkommmte, wenn die Ventile am Boden der Reifebehälter geöffnet sind, wobei das Transportband für den Transport des gerösteten Kaffees zu einer Eingabestelle einer pneumatischen Vorrichtung für den Transport von geröstetem Kaffee zu einem Staubzentrifugalabscheider eingerichtet ist, ein luftdichtes Rotationsventil am Boden des Staubzentrifugalabscheiders zur Weiterleitung von geröstetem Kaffee zu einem Rotationsverteiler ; der den gerösteten Kaffee durch eine entsprechende Verteilungsleitung in einen oder mehrere Stabilisierungsbehälter verteilt sowie eine Leitung, die den Staubzentrifugalabscheider mit einem Luftfilter verbindet, umfaßt.

5. Anlage nach Anspruch 4, dadurch gekennzeichnet, daß sie eine Quelle von unter Druck stehendem $CO_2$ und eine Quelle von unter Druck stehendem $N_2$ aufweist, von denen eine jede mit jedem Reifebehälter über eine Leitung und ein Einlaßventil verbunden ist, wobei das Einlaßventil von einem Operator gesteuert wird, um, sobald er die Zufuhr von geröstetem Kaffee in jeden Reifebehälter gestoppt hat, in jeden Reifebehälter zuerst einen $CO_2$-Strom und dann einen $N_2$-Strom einzublasen und die Hauptmenge Luft daraus durch das Auslaßventil zu entfernen, und daß sie einen automatischen Analysator aufweist, der zur periodischen Kontrolle des $O_2$-Prozentgehaltes in jedem Reifebehälter während des $CO_2$-Einblasens und während und nach dem $N_2$-Einblasen eingerichtet ist.

6. Anlage nach Anspruch 4, dadurch gekennzeichnet, daß sie eine Quelle von unter Druck stehendem $N_2$ aufweist, die mit jedem Reifebehälter über eine Leitung und ein Einlaßventil verbunden ist, wobei das Einlaßventil von einem Operator, sobald er die Zufuhr von geröstetem Kaffee zu jedem Reifebehälter gestoppt hat, für das Einblasen eines $N_2$-Stromes in die Reifebehälter und für das Entfernen der Hauptmenge der Luft aus denselben durch das Auslaßventil gesteuert wird, und daß sie einen automatischen Analysator enthält, der für eine periodische Kontrolle des $O_2$-Prozentgehaltes in jedem Reifebehälter während und nach dem Einblasen von $N_2$ eingerichtet ist.

**Revendications**

1. Procédé de traitement de café torréfié, dans lequel on amène le café torréfié à un ou plusieurs récipients étanches à l'air dans lesquels le café libère du gaz que l'on élimine en soufflant de l'air ou un autre gaz et dans lesquels le café reste pendant un certain laps de temps sous pression réglée avant d'être moulu ou emballé, ledit procédé étant caractérisé par le fait que l'on conduit une première étape dans un ou plusieurs récipients de conditionnement et que l'on conduit une deuxième étape dans un ou plusieurs récipients de stabilization; par le fait que la première étape du procédé comprend un premier stade dans lequel on amène du café torréfié à chaque récipient de conditionnement, puis y insuffle un courant de $CO_2$ ou encore de $N_2$ pour éliminer l'air jusqu'à ce que le pourcentage de $O_2$ dans chaque récipient de conditionement soit compris entre 0,2 et 1%, de préférence entre 0,4 et 0,5 %; par le fait qu'un deuxième stade du procédé consiste à élever la pression de gaz dans chaque récipient de conditionnement juste après l'achèvement du premier stade, au moins à la valeur de 0,4 atmosphère et à élever et à maintenir la pression dans chaque récipient de conditionnement à une valeur au moins égale à 1 atmosphère et non supérieure à 1,8 atmosphère; par le fait que le laps de temps du deuxième stade est d'environ vingt-et-un jours pendant lesquels un analyseur analyse périodiquement le rapport $O_2/CO_2$ dans chaque récipient de conditionnement et un opérateur vérifie que le pourcentage de $O_2$ dans chaque récipient de conditionnement est d'une valeur prédéterminée comprise entre les valeurs de pourcentage spécifiées ci-dessus et, si ce pourcentage est trop élevé, il agit de manière à insuffler un courant approprié de $CO_2$ ou encore de $N_2$ dans chaque récipient de conditionnement et à en retirer de l'air de façon correspondante; par le fait qu'à la deuxième étape du procédé, on fait passer le café torréfié de chaque récipient de conditionnement à un ou plusieurs récipients de stabilisation dans lesquels le café séjourne pendant quelques heures en contact avec de l'air ambiant et est alors livré à une installation de broyage ou d'emballage.

2. Procédé selon la revendication 1, caractérisé par le fait que l'on conduit un premier stade dans lequel on amène du café torréfié à chaque récipient de conditionnement, puis insuffle d'abord un courant de $CO_2$ afin d'en éliminer l'air et finalement insuffle un courant de $N_2$ jusqu'à ce que le pourcentage de $O_2$ dans chaque récipient de conditionnement à gaz soit compris entre 0,2 et 1%, de préférence entre 0,4 et 0,5 %, le milieu ambiant du café dans chaque récipient de conditionnement étant $N_2$ et $O_2$, et par le fait qu'un analyseur analyse périodiquement d'abord le rapport $O_2/CO_2$ et ensuite analyse le rapport $O_2/N_2$ dans chaque récipient de conditionnement et qu'un opérateur vérifie que le pourcentage de $O_2$ dans chaque récipient de conditionnement est d'une valeur prédéterminée comprise entre les valeurs de pourcentage spécifiées ci-dessus, de sorte que si ce pourcentage est trop élevé, il agit de manière à insuffler un courant approprié de $CO_2$ ou $N_2$ dans chaque récipient de conditionnement et à en retirer de l'air supplémentaire de façon correspondante.

3. Procédé selon la revendication 1, caractérisé par le fait qu'à la deuxième étape du procédé, on fait passer le café torréfié de chaque récipient de conditionement à un ou plusieurs récipients de stabilisation dans lesquels le café séjourne quelques heures dans un courant d'air convenablement humidifié et est alors délivré à un installation de broyage ou d'emballage.

4. Installation pour la mise en oeuvre du procédé selon les revendications précédentes, comprenant des moyens pour amener du café torréfié à un appareil qui déplace le café torréfié, un ou plusieurs récipients de conditionnement dans lesquels le café déplacé par cet appareil est amené par des moyens d'entrée, des moyens pouvant être commandés pour l'admission de gaz aux récipients de conditionnement, des moyens pouvant être commandés pour la sortie de gaz des récipients à l'épreuve des gaz, au moins une source de gaz, des moyens pour insuffler du gaz dans les récipients de conditionnement à travers les moyens pouvant être commandés pour l'admission de gaz, des moyens pour la commande de la pression maximale permise pour le gaz dans les récipients de conditionnement, des moyens pour permettre, la sortie du café torréfié des récipients de conditionnement, ladite installation étant caractérisée par le fait qu'elle comprend un appareil pneumatique pour amener du café torréfié à chaque récipient de conditionnement à travers une valve d'entrée commandée par un opérateur pour l'entrée du café déplacé par l'appareil pneumatique, une source de $CO_2$ sous pression reliée à chaque récipient de conditionnement par un conduit et une valve d'entrée, la valve d'entrée étant commandée par un opérateur pour l'entrée de $CO_2$ dans chaque récipient de conditionnement quand l'opérateur arrête l'entrée du café torréfié dans chaque récipient de conditionnement et pour en retirer la majeure partie de l'air, une valve pour la sortie de chaque récipient de conditionnement, commandée par un opérateur, pour la sortie de l'air de chaque récipient de conditionnement pendant l'entrée du café torréfié et du $CO_2$ dans chaque récipient de conditionnement, un conduit reliant les valves de sortie à un filtre pour l'air retiré de chaque récipient de conditionnement, une valve d'échappement dans chaque récipient de conditionnement, commandée par un opérateur pour permettre l'évacuation de gaz de chaque récipient de conditionnement quand la pression de gaz dépasse une grandeur prédéterminée, une valve de sûreté dans chaque récipient étanche à l'air, réglée pour permettre l'évacuation de gaz de chaque récipient de conditionnement quand la pression de gaz dépasse une grandeur un peu supérieure à la grandueur prédéterminée ci-dessus, un analyseur automatique conçu pour commander périodiquement le pourcentage de $O_2$ dans chaque récipient de conditionnement pendant et après l'insufflation du courant de $CO_2$, un dispositif par lequel un opérateur actionne l'insufflation du gaz sous pression dans chaque récipient de conditionnement sur commande de l'analyseur automatique, par les valves d'entrée, un manomètre associé à chaque récipient de conditionnement, un dispositif d'échappement rapide et un dispositif d'alarme associé à chaque récipient de conditionnement pour fonctionner au cas où la valve de sûreté présente une défaillance, une valve au fond de chaque récipient de conditionnement, qu'on opérateur peut actionner pour faire tomber au dehors le café moulu, un transporteur dans lequel le café torréfié pénètre quand les valves du fond des récipients de conditionnement s'ouvrent, le transporteur étant conçu pour amener le café torréfié à un moyen d'entrée d'un appareil pneumatique pour amener du café torréfié à un séparateur centrifuge de poussière, une valve tournante étanche à l'air au fond du séparateur centrifuge de poussière pour faire passer du café torréfié dans un distributeur tournant conçu pour distribuer le café torréfié dans un ou plusieurs récipients de stabilisation par un conduit de distribution correspondant, un conduit reliant le séparateur centrifuge de poussière à un filtre à air.

5. Installation selon la revendication 4, caractérisée par le fait qu'elle comprend une source de $CO_2$ sous pression et une source de $N_2$ sous pression, chacune d'elles étant reliée à chaque récipient de conditionnement par un conduit et une valve d'entrée, la valve d'entrée étant commandée par un opérateur pour insuffler dans chaque récipient de conditionnement, une fois que l'opérateur a arrêté l'amenée de café torréfié à chaque récipient de conditionnement, d'abord un courant de $CO_2$ et ensuite de $N_2$ et pour en retirer la majeure partie de l'air par la valve de sortie, et par le fait qu'elle comprend un analyseur automatique conçu pour contrôler périodiquement le pourcentage de $O_2$ dans chaque récipient de conditionnement pendant l'insufflation de $CO_2$ et pendant et après l'insufflation de $N_2$.

6. Installation selon la revendication 5, caractérisée par le fait qu'elle comprend une source de $N_2$ sous pression reliée à chaque récipient de conditionnement par un conduit et une valve d'entrée, la valve d'entrée étant commandée par un opérateur pour insuffler dans les récipients de conditionnement, une fois que l'opérateur a arrêté l'amenée de café torréfié à chaque récipient de conditionnement, ou courant de $N_2$ et pour en éliminer la majeure partie de l'air par la valve de sortie, et par le fait qu'elle comprend un analyseur automatique conçu pour contrôler périodiquement le pourcentage de $O_2$ dans chaque récipient de conditionnement pendant et après l'insufflation de $N_2$.

0 092 803

1